(19) Europäisches Patentamt
European Patent Office
Office européen des brevets

(11) **EP 2 276 326 A1**

(12) **EUROPEAN PATENT APPLICATION**

(43) Date of publication:
**19.01.2011 Bulletin 2011/03**

(51) Int Cl.:
*H05B 6/64* (2006.01)     *F24C 14/02* (2006.01)

(21) Application number: **10163523.3**

(22) Date of filing: **21.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **15.07.2009 KR 20090064393**

(71) Applicant: **Samsung Electronics Co., Ltd.**
**Suwon-si, Gyeonggi-do (KR)**

(72) Inventors:
 • **Jeon, Ki Suk**
 **Gyeonggi-do (KR)**

 • **Paik, Sang Hoon**
 **Gyeonggi-do (KR)**
 • **Joo, Jae Man**
 **Gyeonggi-do (KR)**
 • **Shon, Jong Chull**
 **Gyeonggi-do (KR)**
 • **Kim, Tae Woo**
 **Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(54) **Pollution sensor, cooking apparatus having sensor for detecting pollution, and control method of cooking apparatus**

(57) Disclosed are a sensor, a cooking apparatus having the sensor, and a control method of the cooking apparatus. The sensor serves to accurately sense a pollution level of the cooking apparatus and to inform of a cleaning time and/or cleaning method based on the pollution level. The pollution level of a cooking compartment may be objectively determined using the sensor that senses the pollution level via a variation of capacitance. Also, it may be possible to guide a cleaning time and/or cleaning method (e.g., manual cleaning, steam cleaning, thermal decomposition cleaning, etc.) based on the pollution level of the cooking compartment, allowing the cooking compartment to be cleaned in the cleaning method at an appropriate cleaning time. In particular, during a thermal decomposition cleaning operation, the pollution level is sensed in real time to enable variable control the cleaning time and automatic control of a cleaning ending time. This may contribute to reduce energy consumption and discharge of $CO_2$.

FIG. 2

## Description

BACKGROUND

1. Field

Embodiments of the present invention relate to a sensor for detecting pollution, a cooking apparatus having the sensor, and a control method of the cooking apparatus, the sensor serving to accurately sense a pollution level of the cooking apparatus, and informing of a cleaning time and/or cleaning method based on the sensed pollution level.

2. Description of the Related Art

Generally, cooking apparatuses include a microwave oven using high-frequency microwaves, and an electric or gas oven using a heater. These cooking apparatuses internally define a cavity having a predetermined space (hereinafter, referred to as a cooking compartment) to cook food in a closed state thereof, so that food placed in the cooking compartment is cooked by heat applied thereto.

In these cooking apparatuses, however, scraps of food may be scattered and adhered to an inner wall surface of the cooking compartment during a cooking operation. As the scraps of food dry and are tightly adhered to the inner wall surface after the cooking operation, it may be difficult for a user to remove the scraps of food when the user cleans the interior of the cooking compartment.

To remove the scraps of food that are difficult to clean, a thermal decomposition cleaning method has been conventionally proposed, in which high temperatures are generated in the cooking compartment to heat the interior of the cooking compartment to a high temperature (about 500°C), so as to burn the scraps of food present in the cooking compartment. The thermal decomposition cleaning method is initiated as the user directly selects the thermal decomposition cleaning method after visually confirming a polluted state of the interior of the cooking compartment. In the thermal decomposition cleaning method, the high temperatures are generated in the cooking compartment for a preset cleaning time (a maximum of four hours).

However, when the cooking compartment undergoes the thermal decomposition cleaning method, it may be hard to accurately determine a cleaning time because the user confirms the polluted state of the cooking compartment with the naked eye. Thus, the user may make only a subjective selection of an appropriate cleaning time within a preset range. Furthermore, despite the fact that the cooking compartment may be sufficiently cleaned using only water or detergents based on a pollution level, there is no standard of judgment to allow the user to judge the water cleaning operation. This may cause the user to carelessly select the thermal decomposition cleaning function, resulting in unnecessary waste of energy and time and increasing discharge of $CO_2$.

SUMMARY

Therefore, it is an aspect of the present invention to provide a sensor to sense an interior pollution level of a cooking compartment, a cooking apparatus to display the pollution level sensed by the sensor and guide a cleaning time and cleaning method based on the pollution level, restraining unnecessary excessive cleaning and allowing a specialized cleaning operation to be implemented at an appropriate time, and a control method of the cooking apparatus.

Additional aspects of the invention will be set forth in part in the description which follows and, in part, will be obvious from the description, or may be learned by practice of the invention.

In accordance with one aspect of the present invention, a sensor includes an electrode unit installed to a cooking apparatus that is used to cook food, and a sensor unit connected to the electrode unit and serving to generate a sensed signal based on a variation of pollution level, the electrode unit including at least one electrode to sense a pollution level of the cooking apparatus.

The electrode may detect a variation of capacitance as it comes into contact with pollutants generated during cooking of the food, to sense the level of pollutants.

The sensor may further include a ground unit corresponding to the electrode, the ground unit being grounded to an inner metal part of the cooking apparatus to output a sensor output value of frequency based on the variation of capacitance.

An insulator may be provided between the electrode unit and the ground unit, to isolate two electrodes from each other.

In accordance with another aspect of the present invention, a cooking apparatus includes a cooking compartment in which food is cooked, a sensor installed in the cooking compartment to sense a pollution level of the cooking compartment, and a controller to control a cleaning operation of the cooking compartment based on an output value of the pollution sensor, the pollution sensor including at least one electrode to detect a variation of capacitance based on a variation of pollution level.

The sensor may include a ground corresponding to the electrode, the ground being grounded to a wall surface metal part of the cooking compartment so as to output a sensor output value of frequency based on the variation of capacitance.

The controller may determine the pollution level of the cooking compartment based on the output value of the pollution sensor, to control a cleaning time and/or cleaning method.

The controller may create and/or store a table in which cleaning times and/or cleaning methods based on pollution levels of the cooking compartment are recorded.

The cleaning methods may include an automatic cleaning method and/or a manual cleaning method based on the pollution level of the cooking compartment, the manual cleaning method may include a manual cleaning operation using water or detergents, and the automatic cleaning method may include a steam cleaning operation and/or a thermal decomposition cleaning operation or a combination therof.

The controller may sense a decrease in the pollution level of the cooking compartment in real time during the thermal decomposition cleaning operation, to control a cleaning ending time.

The sensor may sense the presence of an accessory in the cooking compartment during the thermal decomposition cleaning operation, and if the accessory is sensed, the controller may guide a removal message of the accessory.

The cooking apparatus may further include a display unit to display the pollution level sensed via the sensor and to guide a cleaning time and/or cleaning method based on the pollution level. The cooking apparatus may further include an input unit to automatically set the cleaning time within a preset arbitrary setting value range, and if the cleaning time is automatically set, the controller may perform a control operation to determine whether a power of the cooking apparatus is turned off, or whether a button of the input unit is operated, or to determine the pollution level of the cooking compartment at a cooking ending time.

The cooking apparatus may further include an input unit to allow a user to manually set the cleaning time, and if the cleaning time is manually set, the controller may perform a control operation to determine the pollution level of the cooking compartment at a cleaning ending time set by the user.

In accordance with a further aspect of the present invention, a control method of a cooking apparatus having a cooking compartment and a sensor, includes sensing a pollution level of the cooking compartment via the pollution sensor, determining a cleaning time and/or cleaning method of the cooking compartment based on the sensed pollution level, and manually inputting a cleaning command of the cooking compartment based on the determined cleaning time and/or cleaning method.

The sensing of the pollution level of the cooking compartment may be performed as the sensor having at least one electrode comes into contact with pollutants generated during cooking so as to detect a variation of capacitance.

The sensing of the pollution level of the cooking compartment may be performed as a ground corresponding to the electrode is grounded to an inner metal part of the cooking apparatus to output a sensor output value of frequency based on the variation of capacitance.

BRIEF DESCRIPTION OF THE DRAWINGS

These and/or other aspects of the invention will become apparent and more readily appreciated from the following description of the embodiments, taken in conjunction with the accompanying drawings of which:

FIG. 1 is a conceptual view illustrating basic characteristics of a sensor according to an embodiment of the present invention;

FIG. 2 is a circuit diagram of the pollution sensor according to the embodiment of the present invention;

FIG. 3 is a front view of a cooking apparatus having the sensor according to the embodiment of the present invention;

FIG. 4 is a view illustrating a configuration of coupling the sensor according to the embodiment of the present invention to the cooking apparatus;

FIG. 5 is a view illustrating an alternative coupling configuration of FIG. 4;

FIG. 6 is a longitudinal sectional view of FIGS. 4 and 5, illustrating a square electrode unit;

FIG. 7 is a longitudinal sectional view of FIGS. 4 and 5, illustrating a circular electrode unit;

FIG. 8 is a view illustrating a configuration of coupling the sensor according to another embodiment of the present invention to the cooking apparatus;

FIG. 9 is a view illustrating an alternative coupling configuration of FIG. 8;

FIG. 10 is a longitudinal sectional view of FIGS. 8 and 9, illustrating a square electrode unit;

FIG. 11 is a longitudinal sectional view of FIGS. 8 and 9, illustrating a circular electrode unit;

FIG. 12 is a control block diagram of the cooking apparatus having the pollution sensor according to the embodiment of the present invention;

FIG. 13 is a flow chart illustrating a cleaning control method of the cooking apparatus having the pollution sensor according to the embodiment of the present invention; and

FIG. 14 is a flow chart illustrating a thermal decomposition cleaning control method of the cooking apparatus having the sensor according to the embodiment of the present invention.

DETAILED DESCRIPTION

Reference will now be made in detail to the embodiments of the present invention, examples of which are illustrated in the accompanying drawings, wherein like reference numerals refer to like elements throughout.

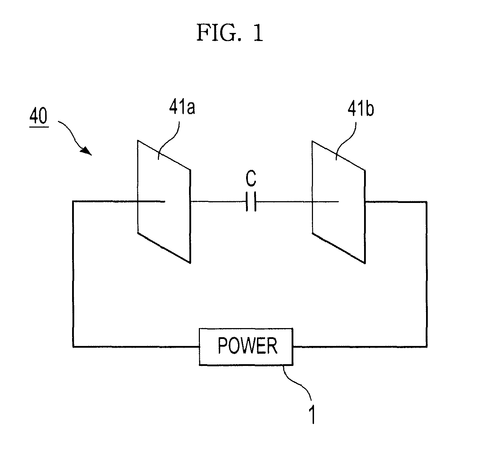

FIG. 1 is a conceptual view illustrating basic characteristics of a pollution sensor according to an embodiment of the present invention.

In FIG. 1, the sensor 40 according to the embodiment of the present invention includes two electrodes 41a and 41b. To detect a capacitance C present between the two electrodes 41a and 41b, characteristics of a material may be represented as numerical values as shown in the following Equation 1. In an embodiment, sensor 40 may be a pollution sensor.

The following Equation 1 represents a capacitance C, which is determined based on characteristics of a material, i.e. dielectric characteristics of a material present between the two electrodes 41a and 41b.

### Equation 1

$$C = \varepsilon_0 \varepsilon_r \frac{A}{d}$$

where, "C" is a capacitance sensed by the sensor 40, "$\varepsilon_0$" is a spatial dielectric constant, "$\varepsilon_r$'" is a relative dielectric constant, "A" is a cross sectional area of the electrodes 41a and 41b, and "d" is a distance between the electrodes 41a and 41b. A power 1 applied between the two electrodes 41a and 41b may have a frequency property, or may generate a predetermined strength of electric field based on an applied voltage.

Although the sensor 40 according to the embodiment of the present invention includes the two electrodes 41a and 41b arranged with a predetermined interval therebetween, alternatively, the sensor 40 may include a single electrode under the assumption of using an inner metal part of a cooking apparatus as a ground. In the latter case, since the single electrode and ground conceptually correspond to two electrodes, the single electrode and ground may exhibit the same basic sensing characteristics as the two electrodes 41a and 41b that are arranged with a predetermined interval therebetween to sense a pollution level via a variation of capacitance C therebetween.

In this way, a pollution level (such as an interior pollution level) of a cooking apparatus is sensed via quantitative analysis of pollutants, i.e. a material adhered between the two electrodes 41a and 41b using the variation of capacitance C in a state wherein the two electrodes 41a and 41b are exposed to the outside.

Now, an example of detecting the variation of capacitance C according to a relative dielectric constant will be described. First, considering a relative dielectric constant $\varepsilon_r$ under the condition of a fixed frequency, the relative dielectric constant $\varepsilon_r$ of vacuum is 1, and the relative dielectric constant $\varepsilon_r$ of water is approximately 78 although the relative dielectric constant is varied according to the frequency. Also, the relative dielectric constant $\varepsilon_r$ of dry scraps of food having no moisture is usually in a range of 5 to 50 and the relative dielectric constant $\varepsilon_r$ of watery or oily material is in a higher range of 8 to 65, although the relative dielectric constant is varied according to the kinds of food pollutants or food carbides. Assuming that the two electrodes 41a and 41b have a fixed shape, a variation of the dielectric constant is proportional to the variation of capacitance C in a direct correlation. Since the capacitance C is a variable of frequency, the frequency decreases as the capacitance C increases, and increase as the capacitance C decreases.

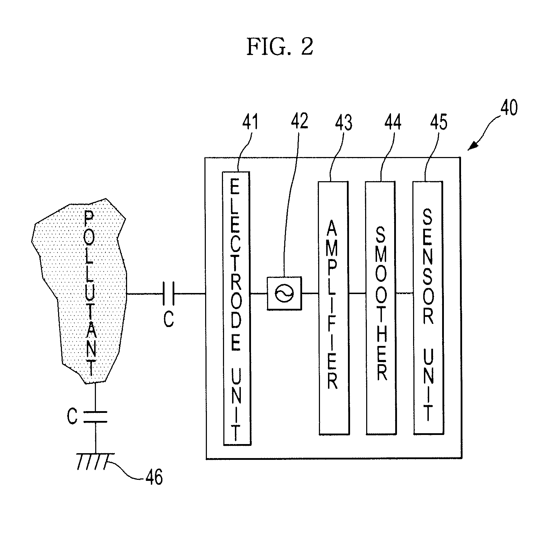

Basically, a circuit signal to sense a pollution level is obtained by sensing a frequency, and a circuit may be constructed as shown in FIG. 2.

FIG. 2 is a circuit of the pollution sensor according to an embodiment of the present invention.

In FIG. 2, the sensor 40 is a capacitance type sensor to transmit a signal by detecting a capacitance C that is varied according to the level of pollutants (i.e. various food scraps separated or scattered from food during a cooking operation) present in a cooking apparatus. With the use of the sensor 40, the level of pollutants present on an inner surface or in an inner space of the cooking apparatus (i.e. the pollution level) may be sensed via a circuit.

The sensor 40 includes an electrode unit 41 to detect a capacitance C that is varied according to the level of pollutants (i.e. the pollution level), a high-frequency oscillator 42 to select a wide bandwidth of frequency from several Hz to hundreds of Hz and transmit the selected frequency to the electrode unit 41, an amplifier 43 to amplify a fine frequency signal received from the electrode unit 41 after a reaction between the electrode unit 41 and the pollutants, a smoother 44 to smooth the amplified frequency signal into a DC signal, and a sensor unit 45 to generate a signal by sensing the level of pollutants adhered to the electrode unit 41 upon receiving the amplified frequency signal. In this case, the smoother 44 may be omitted according to the kind of the sensor unit 45. Specifically, although the smoother 44 is used when the level of pollutants adhered to the electrode unit 41 is sensed using a smoothed DC signal, the smoother 44 may be omitted when the level of pollutants adhered to the electrode unit 41 is sensed by measuring a frequency.

FIG. 2 illustrates the single electrode unit 41. In this case, the level of pollutants present in a space between the electrode unit 41 and the corresponding ground unit 46, or present on the surface of the electrode unit 41 (a wide range of pollutants from gas-phase pollutants including air to liquid-phase pollutants) is detected via the variation of capacitance C. The ground unit 46 corresponding to the electrode unit 41 may be a metal part of an inner wall surface of the cooking apparatus.

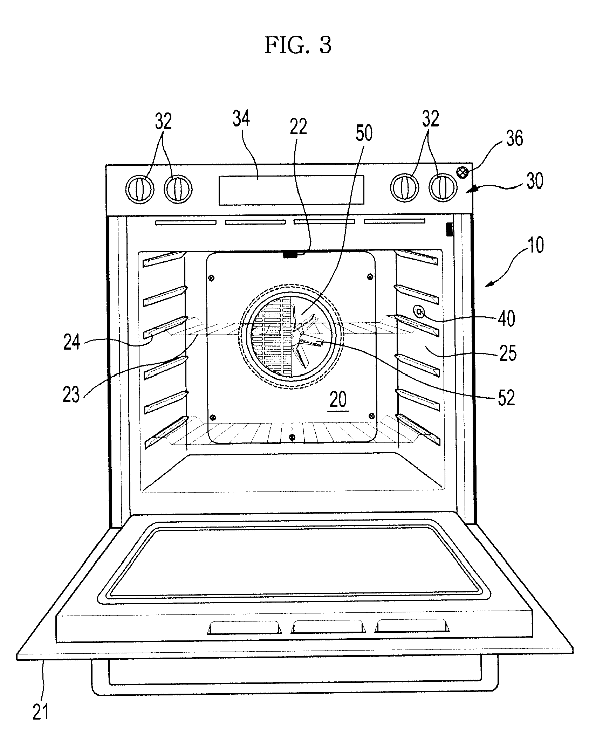

FIG. 3 is a front view of a cooking apparatus having the pollution sensor according to an embodiment of the present invention.

In FIG. 3, the cooking apparatus according to the embodiment of the present invention includes a cabinet-shaped body 10 defining an external appearance of the cooking apparatus, a cooking compartment 20 defined in the body 10 to heat and cook food in closed state thereof, and an operating panel 30 to control operation of the cooking apparatus.

A door 21 is provided at a front side of the cooking compartment 20, to open or close the open front side of the cooking compartment 20. A temperature sensor 22 maybe attached to an upper end of a rear surface of the cooking compartment 20 and serves to sense an interior temperature of the cooking compartment 20. However, it is not limited thereto. A plurality of guide rails 24 is detachably attached to side surfaces 25 of the cooking compartment 20, so that a tray 23, on which food is placed, is separably fitted to the guide rails 24. The sensor 40 to sense an pollution level of the cooking compartment 20 is installed to the side surface 25 of the cooking compartment 20 at a position near the guide rails 24 attached to the side surface 25. However, the sensor may be installed anywhere in the compartment 20.

A blower chamber 50 for air circulation in the cooking compartment 20 is defined in the rear surface of the cooking compartment 20. A circulating fan (or a convection fan) 52 is provided in the blower chamber 50. The circulating fan 52 serves to circulate hot air within the cooking compartment 20 as various heaters (not shown) act to heat of the cooking compartment 20. With the above-described configuration, the air of the cooking compartment 20 is suctioned into the blower chamber 50 and then, is blown in a circumferential direction of the circulating fan 52 via rotation of the circulating fan 52. Accordingly, the air is suctioned from the cooking compartment 20 into the blower chamber 50 and then, is again returned into the cooking compartment 20. Food is heated and cooked by the circulation of hot air within the cooking compartment 20.

The operating panel 30 includes an input unit 32, a display unit 34, and a sound unit 36. The input unit 32 is used to input cooking information, such as a cooking time, cooking menu, etc. The display unit 34 functions not only to display the input cooking information and/or an operating mode of the cooking apparatus, but also to guide a cleaning beginning time and/or cleaning ending time and/or a cleaning method (manual cleaning, steam cleaning, thermal decomposition, etc.) based on an interior pollution level of the cooking compartment 20. The sound unit 36 functions to inform of the cleaning beginning time and/or cleaning ending time based on the pollution level.

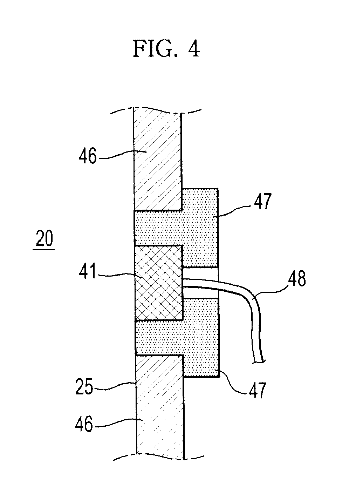

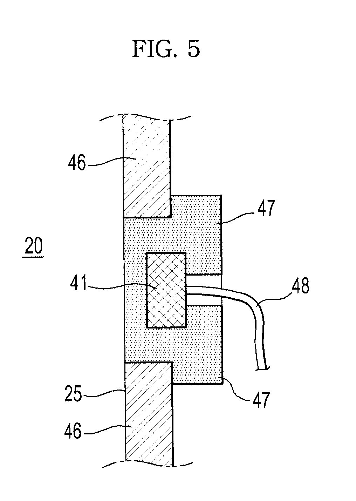

FIG. 4 is a view illustrating a configuration of coupling the pollution sensor according to the embodiment of the present invention to the cooking apparatus. FIG. 5 is a view illustrating an alternative coupling configuration of FIG. 4.

In FIGS. 4 and 5, the sensor 40 includes the electrode unit 41 to detect a capacitance C that is varied according to the level of pollutants (i.e. the pollution level) in the cooking compartment 20, the ground unit 46 corresponding to the electrode unit 41, and an aluminum or ceramic based insulator 47 to isolate the electrode 41 and the ground unit 46, i.e. two electrodes from each other. The electrode unit 41 has an induction electrode and functions to detect the pollution level of the cooking compartment 20 from a wall surface or an inner space of the cooking compartment 20, to transmit the variation of capacitance C to a controller that will be described hereinafter via a cable 48. In this case, the ground unit 46 corresponding to the electrode unit 41 induces a metallic inner wall surface 25 of the cooking compartment 20 to a grounded state.

As shown in FIGS. 4 and 5, the sensor 40, which uses the ground unit 46 as an electrode, indicates, as an absolute value, the pollution level based on the variation of capacitance C between the electrode unit 41 and the ground unit 46, i.e. between two electrodes.

FIG. 4 illustrates a configuration in which the single electrode unit 41 is attached to the wall surface 25 of the cooking compartment 20 so as to be exposed to the outside, and FIG. 5 illustrates a configuration in which the single electrode unit 41 is embedded in the wall surface 25 of the cooking compartment 20 so as not to be exposed. Of course, the electrode unit 41 of the sensor 40 according to the embodiment of the present invention may be installed in any other configurations.

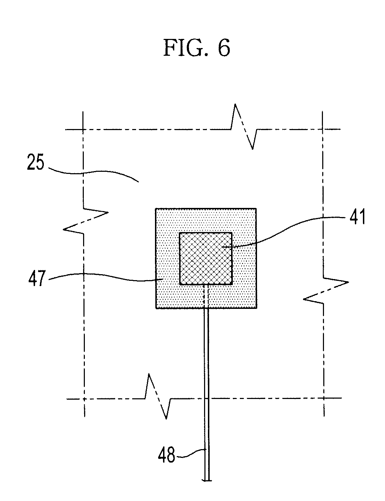

FIG. 6 is a longitudinal sectional view of FIGS. 4 and 5, illustrating the square-shaped single electrode unit 41 installed to the wall surface 25 of the cooking compartment 20.

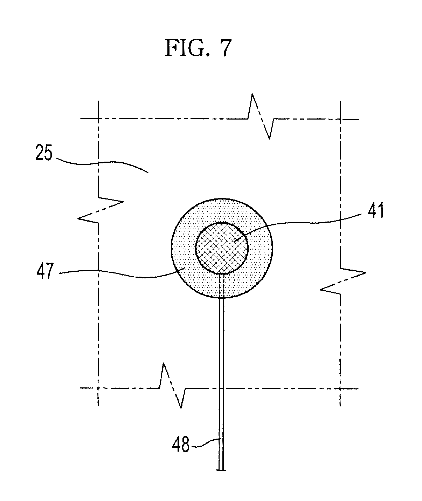

FIG. 7 is a longitudinal sectional view of FIGS. 4 and 5, illustrating the circular-shaped single electrode unit 41 installed to the wall surface 25 of the cooking compartment 20.

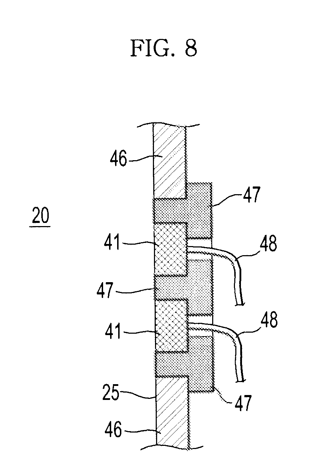

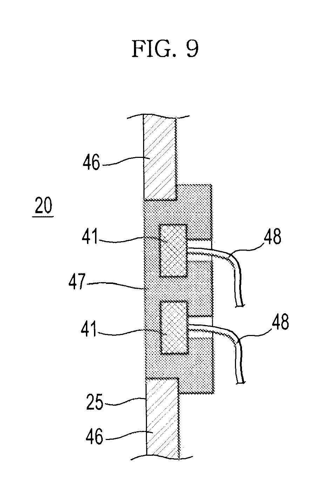

FIG. 8 is a view illustrating a configuration of coupling the pollution sensor according to another embodiment of the present invention to the cooking apparatus. FIG. 9 is a view illustrating an alternative coupling configuration of FIG. 8.

In FIGS. 8 and 9, the sensor 40 includes two electrode units 41 to detect a capacitance C that is varied according to an interior pollution level of the cooking compartment 20, ground units 46 corresponding to the two electrode units 41, and aluminum or ceramic based insulators 47 to isolate the two electrodes 41 from each other. The two electrode units 41 have induction electrodes and function to detect the interior pollution level of the cooking compartment 20 from the wall surface or inner space of the cooking compartment 20 and transmit a variation of capacitance C to the controller that will be described hereinafter via the cable 48.

As shown in FIGS. 8 and 9, the sensor 40, which uses the two electrode units 41, indicates, as a relative value, the pollution level based on the variation of capacitance C between the two electrode units 41.

FIG. 8 illustrates a configuration in which the two electrode units 41 are attached to the wall surface 25 of the cooking compartment 20 so as to be exposed to the outside, and FIG. 9 illustrates a configuration in which the two electrode units 41 are embedded in the wall surface 25 of the cooking compartment 20 so as not to be exposed. Of course, the electrode units 41 of the sensor 40 according to the embodiment of the present invention may be installed in any other configurations.

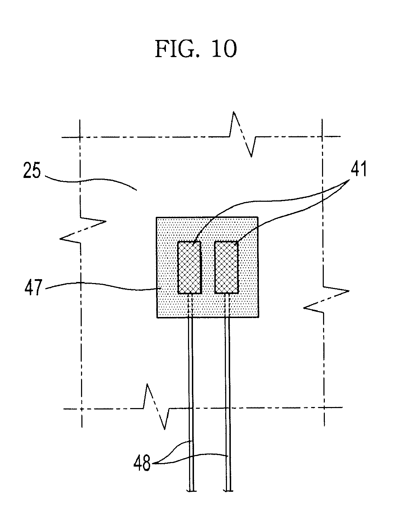

FIG. 10 is a longitudinal sectional view of FIGS. 8 and 9, illustrating the square-shaped two electrode units 41 installed to the wall surface 25 of the cooking compartment 20.

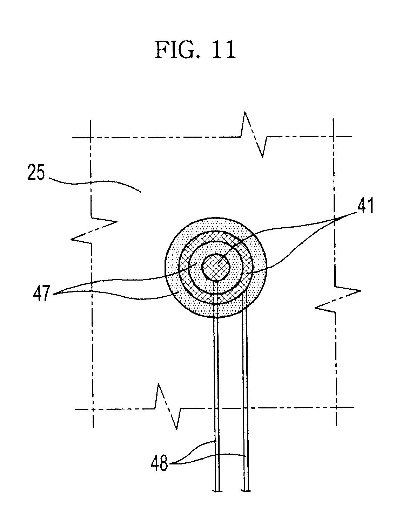

FIG. 11 is a longitudinal sectional view of FIGS. 8 and 9, illustrating the circular-shaped two electrode units 41 installed to the wall surface 25 of the cooking compartment 20.

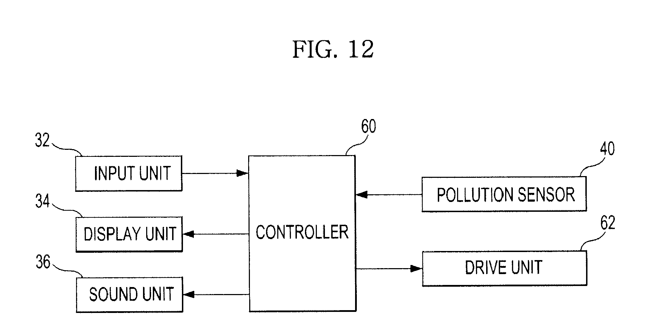

FIG. 12 is a control block diagram of the cooking apparatus having the sensor according to the embodiment of the present invention. In FIG. 12, the input unit 32, display unit 34, sound unit 36, sensor 40, controller 60, and drive unit 62 are illustrated.

The input unit 32 is used to input a user command to begin an operation based on cooking information (e.g., cooking time, cooking menu, etc.) and various cleaning methods (e.g., manual cleaning, steam cleaning, and thermal decomposition cleaning) to the controller 60. For this, the input unit 32 may include a plurality of buttons including start buttons of various cleaning methods (the manual cleaning, steam cleaning, and thermal decomposition cleaning).

The input unit 32 further includes automatic/manual setting buttons to enable automatic setting of a cleaning time within a predetermined cleaning time or to allow the user to manually set the cleaning time.

The display unit 34 visually displays the pollution level of the cooking compartment 20 sensed by the pollution sensor, and guides a cleaning time and cleaning method based on the pollution level. In particular, with relation to a thermal decomposition cleaning operation, the display unit 34 displays a message to command removal of any accessory, such as, e.g., the guide rails 24, placed in the cooking compartment 20, or a message to inform of a cleaning ending time as the pollution level of the cooking compartment 20 is lowered.

The sound unit 36 aurally informs of the pollution level of the cooking compartment 20 sensed by the pollution sensor and also, informs of the cleaning time and cleaning method based on the pollution level, In particular, with relation to the thermal decomposition cleaning operation, the sound unit 36 outputs a sound to inform of the cleaning ending time as the pollution level of the cooking compartment 20 is lowered.

The sensor 40 senses the interior pollution level of the cooking compartment 20 via quantitative analysis of pollutants, and transmits the sensed pollution level to the controller 60. Even if a fine variation of capacitance C, such as noise, occurs during operation of the sensor 40, the sensor 40 may filter the noise via a stabilizing circuit thereof. The sensor 40 is set to periodically sense the interior pollution level of the cooking compartment 20. The sensor 40 may be set to automatically sense the pollution level even after completion of a cooking operation and also, may be set to automatically sense the pollution level when the power of the cooking apparatus is turned on or the button of the input unit 32 is operated.

The controller 60 is a microcomputer to control operation of the cooking apparatus according to the user command received from the input unit 32. As the sensor 40 senses the interior pollution level of the cooking compartment 20 or automatically senses the pollution level (e.g., when the power of the cooking apparatus is turned on or the button is operated after completion of a cooking operation), the controller 60 determines a cleaning beginning time (i.e., a capacitance of a predetermined value or more) and/or a cleaning method (e.g., manual cleaning, steam cleaning, and thermal decomposition cleaning) based on the pollution level, thereby controlling a cleaning operation of the cooking compartment 20.

The drive unit 62 performs a cooking operation, steam cleaning operation, or thermal decomposition cleaning operation based on drive control signals of the controller 60.

Hereinafter, the pollution sensor having the above-described configuration, the cooking apparatus having the pollution sensor, and sequential processes and operational effects of a control method of the cooking apparatus will be described.

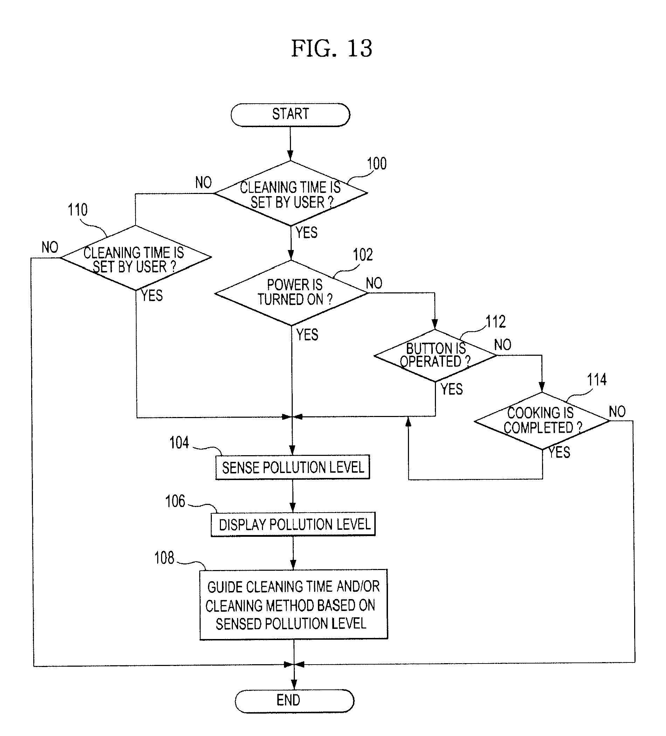

FIG. 13 is a flow chart illustrating a cleaning control method of the cooking apparatus having the pollution sensor according to the embodiment of the present invention.

In FIG. 13, the user selects, by use of the automatic/manual setting button provided at the input unit 32, whether a cleaning time will be automatically determined, or will be manually set by the user.

Accordingly, the controller 60 receives an automatic/manual setting command with respect to the cleaning time from the input unit 32, determining whether the cleaning time is automatically set (100).

If it is determined from the result of the operation 100 that the cleaning time is automatically set, the controller 60 determines whether the power of the cooking apparatus is turned on (i.e. power is supplied) (102). If the power is turned on, the sensor 40 senses the pollution level of the cooking compartment 20 and the controller determines the sensed pollution level using sensed the pollution level of the cooking compartment 20 (104).

To sense the pollution level of the cooking compartment 20, the sensor 40 detects a capacitance C between the electrode unit 41 and the ground unit 46, i.e. between two electrodes. This sensing method is referred to as a capacitance method in which a signal is transmitted via a reaction between an electrode having a fixed capacitance C and pollutants attached to the electrode.

Generally, the capacitance method is based on the fact that a material (more particularly, pollutants) may have a higher dielectric constant than a dielectric constant of vacuum (or air). For example, the dielectric constant of vacuum is 1, the dielectric constant of pollutants as dry scraps of food is in a range of 5 to 50, and the dielectric constant of oily or watery pollutants is in a range of 8 to 65. Here, the dielectric constant represents a nature related to dielectric polarization of a material. That is, the dielectric constant is one of electric constants of a dielectric material and the dielectric material has a nature of conserving electric energy. When the sensor 40 adopts the capacitance method, the sensor 40 may sense contact of pollutants having a high dielectric constant and thus, may acquire stable signals.

With the above-described characteristics of the sensor 40, the capacitance C decreases when the pollution level of the cooking compartment 20 is low, and increases when the pollution level is high. Thereby, the capacitance C based on the pollution level is detected, and a frequency signal corresponding to the detected capacitance C is transmitted to the controller 60 via the cable 48.

The controller 60 controls the display unit 34 provided at the operating panel 30 to display the pollution level sensed by the sensor 40 (106), and then, controls the display unit 34 and/or sound unit 36 to guide an appropriate cleaning time and cleaning methods (manual cleaning using water or detergents, steam cleaning, or thermal decomposition cleaning) based on the sensed pollution level (108). For this, the controller 60 creates and/or stores a table in which appropriate cleaning times and cleaning methods based on different pollution levels are stored.

More specifically, the controller 60 basically determines an initial relative dielectric constant and a relative dielectric constant based on the pollution level using a predetermined table. In this case, a temperature has less effect on the variation of relative dielectric constant and therefore, is not considered. It was found from actual test results that a variation of capacitance C due to a temperature variation during operation of the cooking apparatus is very slight and is indistinctive. However, in the case where a relative dielectric constant range according to a temperature variation may be important, the controller 60 may be linked with the temperature sensor 22 installed in the cooking apparatus or attached to the sensor 40, to create and store a table in which temperature compensation values are recorded. Alternatively, a temperature compensation circuit may be provided to enable a temperature compensation operation of the electrode unit 41 of the sensor 40.

The controller 60 allows an automatic cleaning method and a manual cleaning method to be selectively set based on the pollution level. With the use of values recorded in the table, the controller 60 guides a message to recommend manual cleaning using water or detergents when the pollution level is low and also, guides a message to recommend thermal decomposition cleaning when the pollution level is high. This allows the user to restrain unnecessary excessive cleaning and to perform a specialized optimum cleaning operation at an appropriate cleaning beginning time.

On the contrary, if it is determined from the result of the operation 100 that the cleaning time is not automatically set, the controller 60 determines whether or not the cleaning time is manually set by the user (110). If the cleaning time is manually set, the controller 60 progresses the operation 104 to sense the interior pollution level of the cooking compartment 20 and performs the following operation.

Also, if it is determined from the result of the operation 102 that the power is not turned on, the controller 60 determines whether or not the button of the input unit 32 is operated (switched) (112). If the button is operated, the controller 60 progresses the operation 104 to sense the pollution level of the cooking compartment 20 and performs the following operation.

If it is determined from the result of the operation 112 that the button is not operated, the controller 60 determines whether or not a cooking operation is completed (114). If the cooking operation is completed, the controller 60 progresses the operation 104 to sense the pollution level of the cooking compartment 20 and performs the following operation.

As described above, since the sensor 40 according to the embodiment of the present invention senses a capacitance C based on the pollution level of the cooking compartment 20 or the quantity of pollutants, a cleaning time may be calculated and also, a cleaning beginning time and/or cleaning method based on the pollution level may be accurately guided.

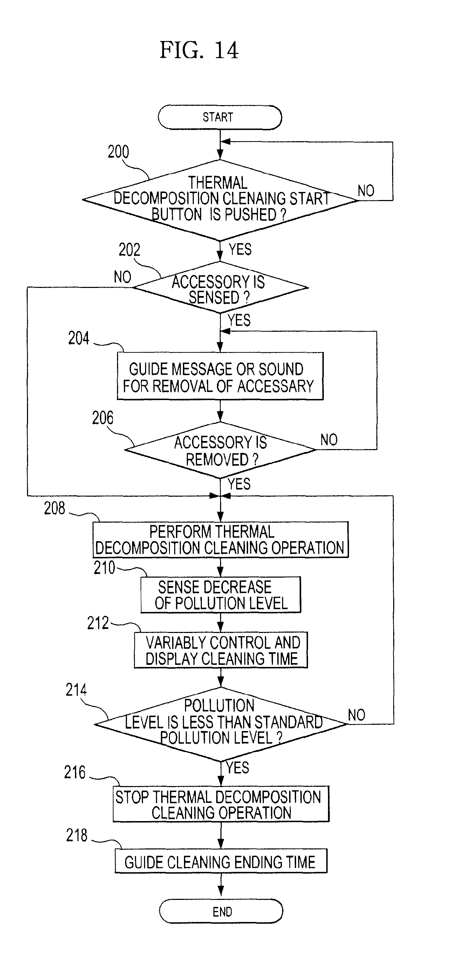

FIG. 14 is a flow chart illustrating a thermal decomposition control method of the cooking apparatus having the sensor according to the embodiment of the present invention.

In FIG. 14, if the user pushes a thermal decomposition cleaning start button provided at the input unit 32, a user command for a thermal decomposition cleaning operation is input into the controller 60.

The controller 60 determines whether the thermal decomposition cleaning start button is pushed (200). If the thermal decomposition cleaning start button is pushed, the controller 60 determines the presence of any accessory in the cooking compartment 20 using the sensor 40 (202).

The capacitance type sensor 40 according to the embodiment of the present invention functions to easily sense all of gas, liquid, and/or solid and thus, may easily detect metal components.

When the sensor 40 senses the presence of any accessory, the controller 60 guides a message or sound to command removal of the accessory in the cooking compartment 20 via the display unit 34 and/or sound unit 36 provided at the operating panel 30. To implement the thermal decomposition cleaning operation, it may be essential to remove any accessory, such as, e.g. guide rails 24 present in the cooking compartment 20. Accordingly, if the user does not remove the accessory, the sensor 40 senses the accessory in the cooking compartment 20 and the controller 60 informs the user of the accessory in the cooking compartment 20. The accessory, such as, e.g., the guide rails 24, are typically plated with chrome and therefore, performing the thermal decomposition cleaning operation without removal of the accessory may cause oxidation and discoloration of an accessory surface when the accessory is exposed at a high temperature of 500°C or more for a long time. For this reason, it may be important to remove the accessory prior to performing the thermal decomposition cleaning operation.

Thereafter, the controller 60 determines via the sensor 40 whether or not the accessory is in the cooking compartment 20 is removed (206). If the accessory is not removed, the controller 60 feeds back to the operation 204 and guides a message and/or sound until the accessory is removed.

If it is determined from the result of the operation 206 that the accessory is removed, the controller 60 controls the drive unit 62 to perform the thermal decomposition cleaning operation (208).

During the thermal decomposition cleaning operation, heat is generated in the cooking compartment 20 to heat the interior of the cooking compartment 20 to a high temperature (up to about 500°C), so as to burn pollutants, i.e., scraps of food present in the cooking compartment 20. As the pollutants are removed, the pollution level of the cooking compartment 20 is gradually lowered.

The sensor 40 senses a variation of the capacitance in real time as the pollutants are removed during the thermal decomposition cleaning operation, and transmits the sensed result to the controller 60 (210). The controller 60 variably controls a cleaning time based on the lowered pollution level and displays the varied cleaning time (or remaining cleaning time) via the display unit 34, thereby enabling automatic control a cleaning ending time (212).

Thereafter, the controller 60 determines based on the decrease of the pollution level sensed via the sensor 40 whether or not the pollution level of the cooking compartment 20 is less than a predetermined pollution level (214). If the sensed pollution level is not less than the predetermined pollution level, the controller 60 feeds back to the operation 208 to continue the thermal decomposition cleaning operation.

If it is determined from the result of the operation 214 that the pollution level is less than the predetermined pollution level, the controller 60 determines that the cleaning operation reaches a cleaning ending time and stops the thermal decomposition cleaning operation via the drive unit 62 (216). The display unit 34 and/or sound unit 36 guide the completion of the interior cleaning of the cooking compartment 20 (218).

In this way, in the embodiment of the present invention, it may be possible to display a residual time until the cleaning operation is completed and to variably control the cleaning time because the sensor 40 senses the decrease of the interior pollution level of the cooking compartment 20 during the thermal decomposition cleaning operation in real time.

Although the embodiment of the present invention exemplifies sensing of the level of pollutants via a variation of capacitance C using the electrode unit 41 of the sensor 40, of course, the embodiment of the present invention is not limited thereto and the same aspects and effects as the embodiment of the present invention may be accomplished even when the pollution level is sensed using inductance of an electric field or induction magnetic field.

As is apparent from the above description, according to the embodiment of the present invention, an pollution level of a cooking compartment may be objectively determined using a sensor that senses the pollution level via a variation of capacitance. Also, it may be possible to guide a cleaning time and/or cleaning methods (e.g., manual cleaning, steam cleaning, thermal decomposition cleaning, etc.) based on the pollution level of the cooking compartment, allowing the cooking compartment to be cleaned in the cleaning method at an appropriate cleaning time. In particular, during a thermal decomposition cleaning operation, the pollution level is sensed in real time to enable variable control the cleaning time and/or automatic control of a cleaning ending time. This may contribute to reduce energy consumption and discharge of $CO_2$.

Although a few embodiments of the present invention have been shown and described, it would be appreciated by those skilled in the art that changes may be made in these embodiments without departing from the principles and spirit of the invention, the scope of which is defined in the claims and their equivalents.

**Claims**

1.   A sensor comprising:

an electrode unit installed to a cooking apparatus that is used to cook food, and a sensor unit connected to the electrode unit to sense a sensed signal based on a variation of level, wherein the electrode unit includes at least one electrode to sense a pollution level of the cooking apparatus.

2.   The sensor according to claim 1, wherein the electrode detects a variation of capacitance as it comes into contact with pollutants generated during cooking of the food, to sense the level of pollutants.

3.   The sensor according to claim 2, further comprising a ground unit corresponding to the electrode, the ground unit being grounded to an inner metal part of the cooking apparatus to output a sensor output value of frequency based on the variation of capacitance.

4.   The sensor according to claim 3, wherein an insulator is provided between the electrode unit and the ground unit, to isolate two electrodes from each other.

5.   A cooking apparatus comprising:

a cooking compartment in which food is cooked;
a sensor installed in the cooking compartment to sense a capacitance of the cooking compartment; and
a controller to determine pollution level based on the sensed capacitance and to control a cleaning operation of the cooking compartment based on the determined pollution level.

6. The cooking apparatus according to claim 5, wherein the pollution sensor includes a ground corresponding to the electrode, the ground being grounded to a wall surface metal part of the cooking compartment so as to output a sensor output value of frequency based on the variation of capacitance.

7. The cooking apparatus according to claim 5, wherein the controller determines the pollution level of the cooking compartment based on the output value of the sensor, to control a cleaning time and cleaning method.

8. The cooking apparatus according to claim 7, wherein the controller creates and stores a table in which cleaning times and/or cleaning methods based on pollution levels of the cooking compartment are recorded.

9. The cooking apparatus according to claim 8, wherein the cleaning methods include an automatic cleaning method and/or a manual cleaning method based on the pollution level of the cooking compartment.

10. The cooking apparatus according to claim 9, wherein the automatic cleaning method includes a steam cleaning operation and/or a thermal decomposition cleaning operation.

11. The cooking apparatus according to claim 10, wherein the controller senses a decrease in the pollution level of the cooking compartment in real time during the thermal decomposition cleaning operation, to control a cleaning ending time.

12. The cooking apparatus according to claim 10, wherein:

the controller determines whether an accessory is in the cooking compartment based upon the sensed capacitance; and
the controller guides a removal message of the accessory if the accessory is in the cooking compartment.

13. The cooking apparatus according to claim 5, further comprising an input unit to automatically set the cleaning time,
wherein the controller performs a control operation to determine whether a power of the cooking apparatus is turned on, or to determine the pollution level of the cooking compartment at a cooking ending time if the cleaning time is automatically set.

14. The cooking apparatus according to claim 5, further comprising an input unit to allow a user to manually set the cleaning time,
wherein the controller performs a control operation to determine the pollution level of the cooking compartment at a cleaning ending time set by the user if the cleaning time is manually set.

15. A control method of a cooking apparatus having a cooking compartment and a sensor, comprising:

sensing a capacitance of the cooking compartment using the sensor;
determining pollution level of the cooking compartment based on the sensed capacitance;
determining a cleaning time of the cooking compartment based on the sensed pollution level; and
inputting a cleaning command of the cooking compartment based on the determined cleaning time.

FIG. 1

FIG. 2

POLLUTANT

C

C

46

41 42 43 44 45 40

ELECTRODE UNIT

AMPLIFIER

SMOOTHER

SENSOR UNIT

FIG. 3

FIG. 4

FIG. 5

FIG. 6

FIG. 7

FIG. 8

FIG. 9

FIG. 10

FIG. 11

FIG. 12

# FIG. 13

```
                    ( START )
                        │
                        ▼
         NO        ╱─────────────╲    100
    ┌─────────────┤ CLEANING TIME IS├╴
    │             ╲  SET BY USER ? ╱
    │              ╲─────────────╱
    │                     │ YES
    │                     │
  110                     ▼
 ╱─────────────╲    ╱─────────────╲   102
╱ CLEANING TIME IS╲╱   POWER IS    ╲     NO
╲  SET BY USER ?  ╱╲  TURNED ON ?  ├────────┐
 ╲─────────────╱    ╲─────────────╱         │
  NO        │ YES         │ YES             │
            │             │                 ▼
            │             │          ╱─────────────╲  112
            │             │         ╱   BUTTON IS   ╲   NO
            │             │         ╲  OPERATED ?   ├──────┐
            │             │          ╲─────────────╱       │
            │             │                 │ YES          ▼
            │             │                 │       ╱─────────────╲ 114
            │             ▼                 │      ╱  COOKING IS   ╲  NO
         104 ┌──────────────────────┐       │      ╲ COMPLETED ?   ├───┐
            │  SENSE POLLUTION LEVEL │◄──────┘       ╲─────────────╱    │
             └──────────────────────┘                      │ YES       │
                        │                                                │
         106            ▼                                                │
             ┌──────────────────────┐                                    │
            │ DISPLAY POLLUTION LEVEL│                                    │
             └──────────────────────┘                                    │
                        │                                                │
         108            ▼                                                │
             ┌──────────────────────┐                                    │
            │ GUIDE CLEANING TIME AND/OR│                                 │
            │ CLEANING METHOD BASED ON  │                                 │
            │ SENSED POLLUTION LEVEL    │                                 │
             └──────────────────────┘                                    │
                        │                                                │
                        ▼                                                │
                    (  END  )◄───────────────────────────────────────────┘
```

# FIG. 14

START

200 THERMAL DECOMPOSITION CLENAING START BUTTON IS PUSHED ? — NO

YES

202 ACCESSORY IS SENSED ? — NO

YES

204 GUIDE MESSAGE OR SOUND FOR REMOVAL OF ACCESSARY

206 ACCESSORY IS REMOVED ? — NO

YES

208 PERFORM THERMAL DECOMPOSITION CLEANING OPERATION

210 SENSE DECREASE OF POLLUTION LEVEL

212 VARIABLY CONTROL AND DISPLAY CLEANING TIME

214 POLLUTION LEVEL IS LESS THAN STANDARD POLLUTION LEVEL ? — NO

YES

216 STOP THERMAL DECOMPOSITION CLEANING OPERATION

218 GUIDE CLEANING ENDING TIME

END

Europäisches
Patentamt

European
Patent Office

Office européen
des brevets

**EUROPEAN SEARCH REPORT**

Application Number

EP 10 16 3523

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X<br>A | EP 0 528 250 A2 (BOSCH SIEMENS HAUSGERAETE [DE]) 24 February 1993 (1993-02-24)<br>* the whole document *<br>----- | 1-7,<br>13-15<br>8-12 | INV.<br>H05B6/64<br>F24C14/02 |
| X | US 5 343 020 A (WAIGAND HELMUT [DE] ET AL) 30 August 1994 (1994-08-30)<br>* abstract *<br>----- | 1,5 | |
| X | US 5 083 010 A (HENRY KARLHEINZ [DE] ET AL) 21 January 1992 (1992-01-21)<br>* abstract *<br>----- | 1 | |
| | | | TECHNICAL FIELDS SEARCHED (IPC)<br><br>H05B<br>F24C |

The present search report has been drawn up for all claims

| Place of search | Date of completion of the search | Examiner |
|---|---|---|
| Munich | 27 October 2010 | Garcia, Jesus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 16 3523

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2010

| Patent document cited in search report | | Publication date | Patent family member(s) | | Publication date |
|---|---|---|---|---|---|
| EP 0528250 | A2 | 24-02-1993 | AT | 118083 T | 15-02-1995 |
| | | | DE | 4127390 A1 | 25-02-1993 |
| | | | ES | 2068658 T3 | 16-04-1995 |
| US 5343020 | A | 30-08-1994 | AT | 118082 T | 15-02-1995 |
| | | | DE | 4127388 A1 | 25-02-1993 |
| | | | EP | 0528173 A1 | 24-02-1993 |
| | | | ES | 2068653 T3 | 16-04-1995 |
| US 5083010 | A | 21-01-1992 | DE | 4017628 A1 | 05-12-1991 |
| | | | EP | 0459131 A1 | 04-12-1991 |
| | | | ES | 2077708 T3 | 01-12-1995 |
| | | | JP | 4227424 A | 17-08-1992 |

EPO FORM P0459

For more details about this annex : see Official Journal of the European Patent Office, No. 12/82